# FASCICULE DE BREVET EUROPEEN

(11) **EP 3 524 905 B1**
(45) Date de publication et mention de la délivrance du brevet: **22.05.2024**
(21) Numéro de dépôt: 19155506.9
(22) Date de dépôt: 05.02.2019
(51) Int. Cl.: F25D 5/00, F42B 15/34, F41A 13/00, F41A 13/12

(54) **DISPOSITIF DE REFROIDISSEMENT À RÉACTION CHIMIQUE ENDOTHERMIQUE**
KÜHLVORRICHTUNG MIT ENDOTHERMISCHER CHEMISCHER REAKTION
COOLING DEVICE WITH ENDOTHERMIC CHEMICAL REACTION

(30) Priorité: 12.02.2018 FR 1800126
(43) Date de publication de la demande: 14.08.2019
(73) Titulaire: MBDA France, 92350 Le Plessis-Robinson (FR)
(72) Inventeur: IATRIDES, Clément, 92358 Le Plessis-Robinson (FR); VERIN, Fabrice, 92358 Le Plessis-Robinson (FR)
(74) Mandataire: Gevers & Orès

(56) Documents cités:
- EP-A1- 2 695 560
- WO-A1-2016/110820
- WO-A2-2008/012515
- JP-A- S60 113 953
- US-A1- 2013 174 600
- "ENDOTHERMIC COOLING CARTRIDGE", IBM TECHNICAL DISCLOSURE BULLETIN, INTERNATIONAL BUSINESS MACHINES CORP. (THORNWOOD), US, vol. 37, no. 11, 1 November 1994 (1994-11-01), pages 567-571, XP000487340, ISSN: 0018-8689

## Description

### DOMAINE TECHNIQUE

La présente invention concerne un dispositif de refroidissement à réaction chimique endothermique.

### ETAT DE LA TECHNIQUE

Ce dispositif de refroidissement est destiné à être utilisé dans de nombreuses applications. Il peut ainsi être utilisé aussi bien dans des équipements déployés dans des installations fixes que dans des équipements embarqués sur des plateformes mobiles. A titre d'illustration, le dispositif de refroidissement peut être utilisé sur un véhicule terrestre, maritime ou aérien, et également sur un missile ou plus généralement sur un système d'arme.

Dans le cadre de la présente invention et des applications envisagées, le dispositif de refroidissement ne doit pas être sensible à des environnements mécaniques et thermiques très sévères et doit pouvoir facilement s'adapter à des contraintes strictes de masse, de volume et d'interfaces mécaniques.

A titre d'illustration, lorsqu'il est monté sur un missile, le dispositif de refroidissement doit pouvoir supporter des contraintes thermiques et mécaniques (notamment vibratoires et d'accélération) très sévères. En particulier, concernant les contraintes thermiques, le domaine de fonctionnement peut se situer dans une large gamme de températures de - 55°C à +125°C.

Dans cette application et dans les autres applications envisagées, les conditions de stockage, de mise en oeuvre et d'utilisation créent ainsi des contraintes fortes, notamment thermiques, sur le dispositif de refroidissement avant son utilisation.

On connaît, par le document US-5184470, un dispositif de refroidissement destiné à être utilisé sur un missile. Ce dispositif de refroidissement comprend une enveloppe avec une interface thermique contenant deux compartiments. Le premier compartiment contient une réserve d'eau sous forme liquide et le second compartiment contient des sels capables de produire une réaction endothermique par dissolution dans l'eau. Ces deux compartiments sont séparés par une membrane ou un conduit, et selon le mode de réalisation, la membrane peut être percée par une pointe avec un dispositif d'actionnement ou le conduit peut être ouvert par une vanne afin de réaliser la dissolution. L'absorption d'énergie (ou le refroidissement) est donc obtenue par la dissolution de sels dans l'eau.

Dans le dispositif de refroidissement du document US-5184470, de l'eau est donc nécessaire pour mettre en oeuvre la réaction endothermique. L'eau est stockée dans le dispositif de refroidissement sous forme liquide avant son déclenchement. Ce stockage présente des contraintes importantes. En particulier :
- le stockage d'eau sous forme liquide pendant des durées longues et avec des conditions de température pouvant varier sous la température de fusion de l'eau et au-dessus de la température d'ébullition de l'eau, entraîne des contraintes importantes de dimensionnement du dispositif de refroidissement, qui peuvent le rendre inutilisable ;
- un tel dispositif de refroidissement ne permet pas de déclencher la réaction endothermique dans toutes les conditions d'orientation et d'accélération envisageables. En effet, même lorsque la membrane est percée ou que la vanne est ouverte, les conditions d'accélération ou d'orientation peuvent empêcher l'écoulement de l'eau et la dissolution des sels ; et
- si les contraintes de masse et de volume sont importantes, la quantité de calorie absorbée peut être insuffisante pour maintenir les éléments à refroidir dans leurs plages de fonctionnement.

Ce dispositif de refroidissement usuel n'est donc pas adapté aux conditions sévères d'environnements mécanique et thermique, envisagées dans le cadre de la présente invention.

Des dispositifs similaires sont connus des documents JP S60 113953 A et US 2013/174600 A1. Un dispositif suivant le préambule de la revendication 1 est connu de la publication >ENDOTHERMIC COOLING CARTRIDGE",IBM TECHNICAL DISCLOSURE BULLETIN, INTERNATIONAL BUSINESS MACHINES CORP. (THORNWOOD), US, vol. 37, no. 11, 1 novembre 1994 (1994-11-01), pages 567-571, XP000487340,ISSN: 0018-8689.

### EXPOSÉ DE L'INVENTION

La présente invention a pour objet un dispositif de refroidissement permettant de remédier à au moins certains des inconvénients précités.

Selon l'invention définie par la revendication 1 ci-jointe, ledit dispositif de refroidissement comporte :
- une enveloppe étanche comprenant au moins deux réactifs, les deux réactifs étant tels que leur mise en contact génère une réaction chimique endothermique ;
- au moins une membrane de séparation configurée pour séparer les deux réactifs dans une position de stockage ;
- au moins un système de mise en contact apte à être activé et configuré pour mettre en contact lesdits au moins deux réactifs lorsqu'il est activé, afin de déclencher la réaction chimique endothermique ;
- un élément d'interface permettant de recevoir un ordre externe de déclenchement qui est généré par un système à l'extérieur du dispositif de refroidissement, et de transmettre ledit ordre au système de mise en contact pour activer ledit système de mise en contact; et
- au moins une interface thermique comprenant au moins une semelle métallique, thermiquement conductrice, dont l'une (interne) des faces est soumise le cas échéant à la réaction chimique endothermique et dont l'autre face (externe) est accessible de l'extérieur du dispositif de refroidissement,
- des moyens configurés pour réduire la pression générée par la réaction chimique endothermique dans une chambre dans laquelle se produit la réaction chimique endothermique, lesdits moyens pour réduire la pression comportant au moins l'un des éléments suivants : au moins un élément mécanique apte à évacuer les gaz de ladite chambre, au moins une paroi déformable de ladite chambre.

Ainsi, grâce à l'invention, le dispositif de refroidissement comprend une pluralité de réactifs, qui d'une part sont disposés dans une enveloppe étanche et sont séparés dans une position de stockage de manière à éviter tout déclenchement intempestif de la génération de froid, et qui d'autre part sont susceptibles d'être mis en contact pour déclencher une réaction chimique endothermique suite à une commande externe reçue par l'élément d'interface. La mise en contact des réactifs génère donc une réaction chimique, c'est-à-dire une transformation de la matière au cours de laquelle les réactifs chimiques sont modifiés et d'autres espèces chimiques sont créées. On notera que la réaction endothermique prévue par le document US-5184470 n'est pas une réaction chimique, mais une simple dissolution de sels dans l'eau qui n'engendre pas une transformation de matière.

Le dispositif de refroidissement génère ainsi, lors de la mise en contact, une zone froide pour l'évacuation des calories d'éléments en contact de la face externe de la semelle métallique.

Dans le cadre de la présente invention, la génération de froid (c'est-à-dire l'absorption d'énergie) est obtenue par au moins une réaction chimique endothermique entre au moins deux réactifs, dont l'enthalpie de formation des produits de réaction est supérieure à celle ses réactifs.

De préférence, les réactifs sont tels que leur mise en contact génère, comme réaction chimique endothermique, une réaction acide base endothermique. De nombreux réactifs sont envisageables à cet effet comme indiqué ci-dessous à titre d'illustration.

On obtient ainsi, grâce à l'invention, un dispositif de refroidissement, à usage unique, qui est particulièrement efficace, et qui ne présente pas les inconvénients d'un dispositif de refroidissement basé sur la dissolution d'un sel dans l'eau sous forme liquide.

De plus, dans la présente invention, les réactifs sont stockés séparément et sont uniquement mis en contact lors de la réception d'un ordre ou commande d'activation (ou de déclenchement) externe. La réaction ne peut donc pas se produire de façon inopinée et non déclenchée.

La présente invention peut donc être mise en oeuvre avec tout couple de réactifs (solides, liquides et/ou gazeux) permettant de respecter les conditions de fonctionnement souhaitées.

Dans le cadre de la présente invention, on entend par couple (de réactifs) les au moins deux réactifs qui génèrent une réaction chimique endothermique quand ils sont mis en contact ; il peut donc s'agir de plus de deux réactifs qui réagissent ensemble.

Dans un mode de réalisation particulier, le dispositif de refroidissement comporte une pluralité de couples de réactifs, et pour chacun desdits couples de réactifs les réactifs du couple sont aptes à être mis en contact pour générer une réaction chimique endothermique.

Si la réaction chimique endothermique libère un composé sous forme gazeuse, le dispositif de refroidissement suivant l'invention comporte des moyens configurés pour réduire la pression générée par la réaction chimique endothermique dans une chambre dans laquelle se produit ladite réaction chimique endothermique.

Dans un premier exemple de réalisation suivant l'invention, lesdits moyens destinés à réduire la pression comportent au moins un élément mécanique, par exemple une valve de surpression, apte à évacuer des gaz de ladite chambre. Dans un second exemple de réalisation suivant l'invention, en complément ou en variante dudit premier exemple de réalisation, lesdits moyens destinés à réduire la pression comportent au moins une paroi déformable (de ladite chambre).

Dans le cadre de la présente invention, le dispositif de refroidissement et notamment le système de mise en contact peuvent être réalisés de différentes manières.

Dans un premier mode de réalisation, le système de mise en contact comporte un système à lame rotative configuré pour déchirer la membrane de séparation afin de mettre en contact les deux réactifs.

Dans ce premier mode de réalisation, avantageusement, le système à lame rotative est également configuré pour mélanger les deux réactifs après leur mise en contact.

En outre, dans un deuxième mode de réalisation, le système de mise en contact comporte au moins un déclencheur pyrotechnique.

Dans ce deuxième mode de réalisation, de façon avantageuse, le déclencheur pyrotechnique est configuré pour agir sur l'un des réactifs auquel il est associé, afin de le projeter de manière à déchirer la membrane de séparation et à le mettre en contact avec l'autre réactif. Avantageusement, le dispositif de refroidissement comporte au moins deux ensembles formés, chacun, d'un réactif et d'un déclencheur pyrotechnique associé.

Par ailleurs, dans un troisième mode de réalisation, l'un des réactifs est sous forme liquide ou dissout dans un liquide, l'autre des réactifs est solide et est pourvu de trous allongés (ou capillaires), et le système de mise en contact comporte au moins une servo-pompe configurée pour faire circuler le réactif liquide dans les trous allongés du réactif solide.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est le schéma synoptique d'un dispositif de refroidissement ;
- les figures 2 et 3 montrent schématiquement un premier mode de réalisation du dispositif de refroidissement, respectivement en vue en plan et en vue latérale ;
- la figure 4 montre schématiquement un deuxième mode de réalisation d'un dispositif de refroidissement ; et
- la figure 5 montre schématiquement un troisième mode de réalisation d'un dispositif de refroidissement.

### DESCRIPTION DÉTAILLÉE

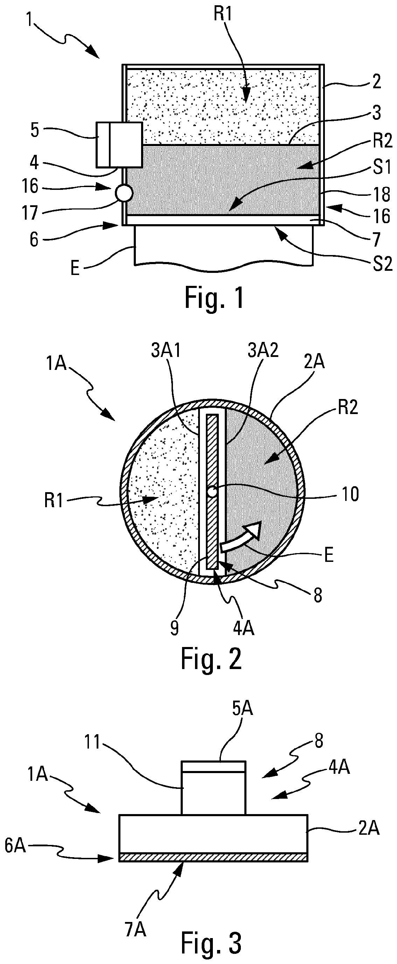

Le dispositif 1, permettant d'illustrer l'invention et représenté très schématiquement sur la figure 1, est un dispositif de refroidissement, qui est destiné à créer une zone froide (ou un ou des points froids).

Selon l'invention, ledit dispositif de refroidissement 1 comporte, comme représenté sur la figure 1 :
- une enveloppe étanche 2 comprenant au moins deux réactifs R1 et R2. Ces deux réactifs R1 et R2 sont tels que leur mise en contact génère une réaction chimique endothermique ;
- au moins une membrane de séparation 3 configurée pour séparer les deux réactifs R1 et R2 dans une position de stockage, c'est-à-dire avant leur mise en contact ;
- au moins un système de mise en contact 4 apte à être activé et configuré pour mettre en contact lesdits réactifs R1 et R2 lorsqu'il est activé, et ceci afin de déclencher la réaction chimique endothermique ;
- un élément d'interface 5 permettant de recevoir un ordre de l'extérieur du dispositif de refroidissement 1 afin d'activer le système de mise en contact 4 ; et
- au moins une interface thermique 6 comprenant au moins une semelle métallique 7, qui est thermiquement conductrice.

Une face S1 dite interne de la semelle métallique 7 est située à l'intérieur de l'enveloppe étanche 2 et est soumise, le cas échéant, directement à la réaction chimique endothermique générée par la mise en contact des réactifs R1 et R2.

L'autre face S2 dite externe de la semelle métallique 7 est accessible de l'extérieur du dispositif de refroidissement 1 et notamment de l'extérieur de l'enveloppe étanche 2.

Ainsi, grâce à l'invention, le dispositif de refroidissement 1 est compact, et il comprend une pluralité de réactifs R1, R2 qui :
- sont disposés dans une enveloppe étanche (et hermétique) 2 dans une position de stockage. On entend par « position de stockage » la position de séparation des deux réactifs, englobant à la fois les situations de stockage du système (par exemple un missile) utilisant le dispositif de refroidissement 1 et éventuellement des situations de fonctionnement de ce système ne nécessitant pas de refroidissement. Grâce à cette enveloppe étanche 2, les constituants du dispositif de refroidissement 1 et notamment les réactifs R1 et R2 sont protégés des conditions externes et notamment de liquides externes ;
- sont séparés (ou isolés) l'un de l'autre ou les uns des autres dans la position de stockage, par la membrane de séparation 3 qui est également étanche et inerte, de manière à éviter toute mise en contact et donc tout déclenchement intempestif de la réaction chimique endothermique ;
- sont susceptibles d'être mis en contact pour générer la réaction chimique endothermique suite à une commande externe, dans une positon dite de mise en contact ou de génération de froid.

Cette commande (ou ordre) externe de déclenchement (ou d'activation) est générée par un système usuel et est transmise de l'extérieur du dispositif de refroidissement 1 à l'élément d'interface 5 qui le transmet, ensuite, au système de mise en contact 4 à l'intérieur du dispositif de refroidissement 1 pour activer (ou déclencher) ledit système de mise en contact 4.

Les réactifs sont donc stockés séparément et sont uniquement mis en contact lors de la réception d'un ordre ou commande d'activation (ou de déclenchement) externe. La réaction ne peut donc pas se produire de façon inopinée ou non déclenchée.

Le dispositif de refroidissement 1 génère ainsi, lors de la mise en contact de réactifs R1, R2, une zone froide pour l'évacuation des calories d'éléments en contact de la face externe S2 de la semelle métallique 7 de l'interface thermique 6.

Dans le cadre de la présente invention, la génération de froid (c'est-à-dire l'absorption d'énergie) est obtenue par au moins une réaction chimique endothermique entre au moins deux réactifs, dont l'enthalpie de formation des produits de réaction est supérieure à celle ses réactifs.

Dans un mode de réalisation particulier, le dispositif de refroidissement 1 comporte une pluralité de couples de réactifs, par exemple deux, trois,...couples de réactifs. Dans ce mode de réalisation particulier, pour chacun desdits couples de réactifs, les réactifs du couple sont séparés dans la position de stockage et sont aptes à être mis en contact pour générer une réaction chimique endothermique.

Dans ce mode de réalisation particulier, en fonction des instants de déclenchement des différentes réactions endothermiques :
- soit plusieurs générations de froid successives peuvent être obtenues, si les mises en contact des couples de réactifs sont successives ;
- soit le froid obtenu peut être généré par l'ensemble des différentes réactions, si les différentes réactions endothermiques sont déclenchées simultanément.

Il est également envisageable de prévoir les deux types de fonctionnement précédents pour un seul et même dispositif de refroidissement 1.

En fonction de la réaction chimique endothermique envisagée, il est également possible de mettre en contact plus de deux réactifs pour générer la réaction chimique endothermique.

Dans un mode de réalisation préféré, les réactifs sont tels que leur mise en contact génère, comme réaction chimique endothermique, une réaction acide base endothermique. De nombreux réactifs sont envisageables, comme indiqué ci-dessous à titre d'illustration.

A titre d'exemple, les réactifs peuvent être l'hydroxyde de baryum octahydraté et un sel d'ammonium, et notamment l'hydroxyde de baryum octahydraté et le chlorure d'ammonium.

La réaction entre l'hydroxyde de baryum octahydraté et le chlorure d'ammonium est une réaction acide base endothermique :

Ba(OH)2·8H2O (s) + 2NH4Cl (s) → BaCl2·2H2O (s) + 2NH3 (aq) + 8H2O (l).

Dans le cadre de la présente invention, d'autres réactions chimiques endothermiques et notamment d'autres réactions acide base endothermiques sont envisageables. On peut citer, à titre d'illustration (non limitative), des réactions acide base endothermiques :
- entre l'hydroxyde de baryum octahydraté et le thiocyanate d'ammonium :

   Ba(OH)2·8H2O (s) + 2 NH₄SCN (s) → Ba(SCN)₂ (s) + 10 H₂O (l) + 2 NH₃ (g);
- entre l'hydroxyde de baryum octahydraté et le nitrate d'ammonium ;
- entre le carbonate de sodium et l'acide acétique ;
- entre l'hydrogénocarbonate de sodium et l'acide acétique :

   NaHCO3 (s) + CH3COOH (aq) → NaOOCCH3 (aq) + H2O (l) + CO2 (g) ;
- entre l'hydrogénocarbonate de sodium et l'acide chlorhydrique :

   NaHCO3 (s) + HCl (aq) → NaCl (aq) + H2O (l) + CO2 (g) ;
- entre l'hydrogénocarbonate de sodium et l'acide citrique :

   H₃C₆H₅O₇(aq) + 3 NaHCOs(s) → 3 CO₂(g) + 3 H₂O(l) + Na₃C₆H₅O₇(aq) ;
- entre le carbonate d'ammonium et un acide carboxylique, par exemple acide acétique, propanoïque ou butanoïque ;
- entre l'hydrogénocarbonate de sodium et l'acide citrique.

La présente invention peut donc être mise en oeuvre avec tout couple de réactifs permettant de remplir les conditions souhaitées.

Dans un mode de réalisation particulier, l'un desdits réactifs R1 et R2 est donc de l'hydroxyde de baryum octahydraté ou monohydraté, et l'autre desdits réactifs R1 et R2 est du chlorure d'ammonium. Dans ce cas, dans une réalisation préférée, la quantité de chlorure d'ammonium est prévue en excès par rapport à la quantité nécessaire à la réaction chimique endothermique, et ceci dans une proportion permettant la saturation de l'eau libérée par la réaction chimique endothermique.

Dans le cadre de la présente invention, les réactifs R1 et R2 utilisés peuvent donc être sous forme solide, liquide ou gazeux, excepté si leur mise en contact provoque une réaction endothermique dont la majorité de l'énergie absorbée le serait par dissolution d'un sel dans l'eau. Si un changement de phase de l'un des réactifs ou produit a lieu au cours de son utilisation, il ne constituera pas la source principale d'absorption des calories. Dans l'exemple précité, les réactifs (hydroxyde de baryum octahydraté et chlorure d'ammonium) sont solides ou liquides dans la plage de températures souhaitée et la réaction n'est pas basée sur la dissolution d'un sel dans de l'eau liquide.

Par ailleurs, si la réaction chimique endothermique libère un composé sous forme gazeuse, le dispositif de refroidissement suivant l'invention 1 comporte des moyens 16 configurés pour réduire une surpression (générée par le ou les gaz libérés par la réaction chimique endothermique) dans la chambre dans laquelle se produit la réaction chimique endothermique. Cette chambre peut correspondre à une partie interne ou être prévue dans une partie interne de l'enveloppe étanche 2 ou bien peut correspondre à l'intérieur de cette enveloppe étanche 2.

Dans un premier exemple de réalisation suivant l'invention, lesdits moyens 16 comportent au moins un élément mécanique 17 (représenté schématiquement sur la figure 1) qui est apte à évacuer les gaz de ladite chambre, vers l'extérieur du dispositif de refroidissement 1. Cet élément mécanique 17 peut, notamment, correspondre à l'un des éléments suivants : une valve de surpression, un purgeur automatique ou une électrovanne. Cet élément mécanique 17 peut être agencé sur l'une quelconque des faces du dispositif de refroidissement 1, sauf sur l'interface thermique 6, et doit être relié à la chambre dans laquelle la réaction chimique endothermique a lieu.

Dans un second exemple de réalisation suivant l'invention, en complément ou en variante dudit premier exemple de réalisation, lesdits moyens 16 comportent au moins une paroi déformable 18 de ladite chambre, comme représenté schématiquement sur la figure 1. Cette paroi déformable 18 permet, par sa déformation, d'augmenter le volume de la chambre et ainsi de limiter une surpression en cas de libération d'un gaz.

Dans le cadre de la présente invention, l'interface thermique 6 peut comporter une ou plusieurs semelles métalliques 7. Une semelle métallique 7 est réalisée, de préférence, sous forme d'une plaque métallique, plane ou courbe, de dimension quelconque et réalisée en un métal bon conducteur thermique, dont la face interne S1 est soumise au froid généré par la réaction chimique endothermique. Ce froid est transmis par le matériau métallique (thermiquement conducteur) de la semelle métallique 7 à la face externe S2. La surface de cette face externe S2 représente donc la zone de froid externe, générée par le dispositif de refroidissement 1.

Par cette face externe S2, le dispositif de refroidissement 1 peut refroidir un élément E (représenté schématiquement et partiellement sur la figure 1) tel qu'un composant, un appareil ou un système, notamment électronique, qui doit être refroidi. Pour ce faire, la face externe S2 peut venir en contact d'une face de cet élément E, comme représenté sur la figure 1.

Le refroidissement peut ainsi être réalisé de façon efficace. De plus, la semelle métallique 7 peut être adaptée à l'élément à refroidir.

Dans un mode de réalisation préféré, la semelle métallique 7 comprend une seule plaque de forme plane.

On obtient ainsi un dispositif de refroidissement 1 à usage unique, qui est particulièrement efficace, qui est apte à générer une zone très froide (de manière à maintenir les éléments à refroidir dans leurs plages de fonctionnement pour les applications envisagées), qui est compact, et qui ne présente pas les inconvénients de dispositifs de refroidissement basés sur la dissolution d'un sel dans de l'eau.

Dans le cadre de la présente invention, le dispositif de refroidissement 1 et notamment le système de mise en contact 4 peuvent être réalisés de différentes manières.

On présente, ci-après, trois modes de réalisation différents, en lien avec les figures 2 à 5. Les références chiffrées des éléments représentés sur les différentes figures sont similaires. On a simplement ajouté à ces références l'une des lettres A ou B ou C en fonction respectivement du premier, deuxième ou troisième mode de réalisation considéré, pour bien les différencier.

L'utilisation de l'un ou l'autre de ces modes de réalisation, dépend notamment, des réactifs employés et de l'efficacité du mode de réalisation considéré pour ces réactifs. L'utilisation de l'un ou l'autre de ces modes de réalisation peut ainsi dépendre, notamment, de caractéristiques physiques des réactifs utilisés (phase, viscosité, corrosivité,...) et de contraintes d'intégration.

Dans un premier mode de réalisation, représenté schématiquement sur les figures 2 et 3, le système de mise en contact 4A du dispositif de refroidissement 1A comporte un système 8 à lame rotative 9.

Dans ce premier mode de réalisation, l'enveloppe 2A externe étanche présente, par exemple, la forme d'un tronçon de cylindre.

La lame rotative 9 du système 8 est agencée à l'intérieur de l'enveloppe 2A et elle présente une longueur légèrement inférieure au diamètre d'une section transversale ronde de l'enveloppe 2A. Cette lame rotative 9 est configurée pour pouvoir tourner autour d'un axe 10 passant au centre de la section transversale ronde. La lame rotative 9 est apte à être entraînée en rotation par un moteur 11, par exemple un moteur électrique, qui peut être activé via l'élément d'interface 5A (figure 3). Ce moteur 11 fait partie du système 8.

Dans la position de stockage, le dispositif de refroidissement 1A comprend deux membranes 3A1 et 3A2 permettant de séparer les deux réactifs R1 et R2. Ces deux membranes 3A1 et 3A2, sont par exemple, montées parallèlement à la lame rotative 9.

Lorsqu'elle est entraînée en rotation (après activation du moteur 11), la lame rotative 9 déchire les membranes 3A1 et 3A2, en tournant par exemple dans le sens représenté par une flèche E sur la figure 2.

Cette rotation permet, en plus de déchirer les membranes 3A1 et 3A2, de mettre en contact les deux réactifs R1 et R2.

En outre, en continuant à tourner, la lame rotative 9 permet de mélanger les deux réactifs R1 et R2 de manière à obtenir une répartition (ou mélange) homogène de ces deux réactifs R1 et R2. Cette répartition homogène permet d'optimiser la réaction chimique endothermique générée par la mise en contact des réactifs R1 et R2.

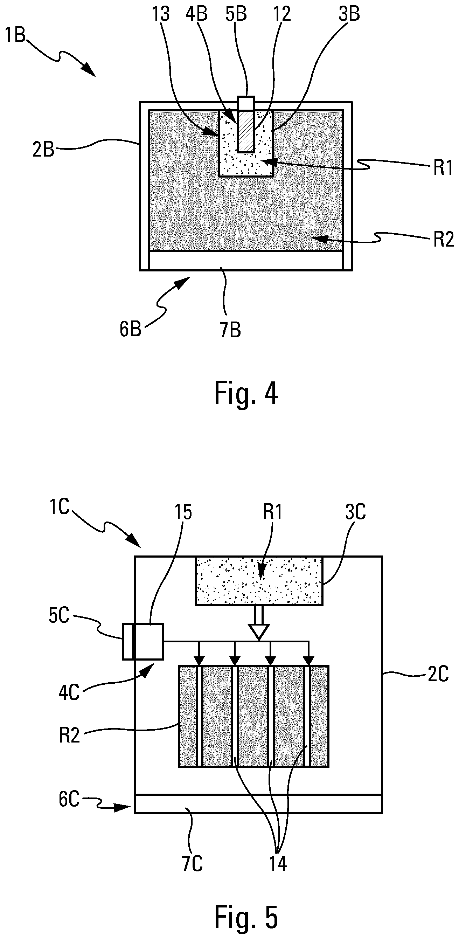

Par ailleurs, dans un deuxième mode de réalisation représenté schématiquement sur la figure 4, le système de mise en contact 4B du dispositif de refroidissement 1B comporte au moins un déclencheur pyrotechnique 12.

Dans ce deuxième mode de réalisation, le déclencheur pyrotechnique 12 forme avec le réactif R1 un ensemble 13 qui est séparé, par la membrane de séparation 3B, du réactif R2. Le déclencheur pyrotechnique 12 est configuré pour agir sur le réactif R1 lorsqu'il est activé (via l'élément d'interface 5B), afin de le projeter de manière à :
- d'une part, déchirer la membrane de séparation 3B ; et
- d'autre part, l'amener en contact du réactif R2 (afin de générer la réaction chimique endothermique).

Dans un mode de réalisation particulier (non représenté), le dispositif de refroidissement 1B peut comporter plusieurs ensembles 13 formés, chacun, d'un réactif et d'un déclencheur pyrotechnique associé.

Par ailleurs, dans un troisième mode de réalisation, représenté schématiquement sur la figure 5, l'un R1 des réactifs du dispositif de refroidissement 1C est sous forme liquide ou dissout dans un liquide, et il est stocké dans un contenant formé d'une membrane de séparation 3C. L'autre réactif R2 est solide, et il est pourvu de trous allongés (ou capillaires) 14.

Dans ce troisième mode de réalisation, le système de mise en contact 4C du dispositif de refroidissement 1A comporte au moins une servo-pompe 15 qui est configurée pour faire circuler le réactif liquide R1, lorsqu'elle est activée (via l'élément d'interface 5C). Plus précisément, la servo-pompe 15 est configurée pour faire circuler le réactif liquide R1dans les trous allongés 14 du réactif R2 solide afin de mettre en contact les deux réactifs R1 et R2 (et ainsi de générer la réaction chimique endothermique).

On notera que, quel que soit le mode de réalisation, l'utilisation d'un système de mise en contact 4 permet de déclencher la réaction chimique endothermique dans toutes les conditions d'orientation et d'accélération envisageables de l'équipement pourvu du dispositif de refroidissement 1.

Bien que non représenté sur les figures 2 à 5, chacun desdits modes de réalisation comporte suivant l'invention des moyens tels que décrits ci-dessus pour réduire une surpression générée par la réaction chimique endothermique dans la chambre dans laquelle se produit cette réaction chimique endothermique.

## Revendications

1. Dispositif de refroidissement comportant :
- une enveloppe étanche (2) comprenant au moins deux réactifs (R1, R2), les deux réactifs (R1, R2) étant tels que leur mise en contact génère une réaction chimique endothermique ;
- au moins une membrane de séparation (3) configurée pour séparer les deux réactifs (R1, R2) dans une position de stockage ;
- au moins un système de mise en contact (4) apte à être activé et configuré pour mettre en contact lesdits au moins deux réactifs (R1, R2) lorsqu'il est activé, afin de déclencher la réaction chimique endothermique ;
- un élément d'interface (5) permettant de recevoir un ordre externe de déclenchement qui est généré par un système à l'extérieur du dispositif de refroidissement (1), et de transmettre ledit ordre au système de mise en contact (4) pour activer ledit système de mise en contact (4) ;
- au moins une interface thermique (6) comprenant au moins une semelle métallique (7), thermiquement conductrice, dont l'une des faces (S1) est soumise le cas échéant à la réaction chimique endothermique et dont l'autre face (S2) est accessible de l'extérieur du dispositif de refroidissement (1) le dispositif étant **caractérisé par**
- des moyens (16) configurés pour réduire la pression générée par la réaction chimique endothermique dans une chambre dans laquelle se produit la réaction chimique endothermique, lesdits moyens (16) pour réduire la pression comportant
au moins l'un des éléments suivants : au moins un élément mécanique (17) apte à évacuer les gaz de ladite chambre, au moins une paroi déformable (18) de ladite chambre.

2. Dispositif selon la revendication 1,
**caractérisé en ce qu'**il comporte une pluralité de couples de réactifs (R1, R2) et **en ce que**, pour chacun desdits couples de réactifs (R1, R2), les réactifs du couple sont aptes à être mis en contact pour générer une réaction chimique endothermique.

3. Dispositif selon l'une des revendications 1 et 2,
**caractérisé en ce que** les réactifs (R1, R2) sont tels que leur mise en contact génère une réaction acide base endothermique.

4. Dispositif selon l'une quelconque des revendications 1 à 3,
**caractérisé en ce que** le système de mise en contact (4A) comporte un système (8) à lame rotative (9) configuré pour déchirer la membrane de séparation (3A1, 3A2) afin de mettre en contact les deux réactifs (R1, R2).

5. Dispositif selon la revendication 4,
**caractérisé en ce que** le système (8) à lame rotative (9) est également configuré pour mélanger les deux réactifs (R1, R2) après leur mise en contact.

6. Dispositif selon l'une quelconque des revendications 1 à 3,
**caractérisé en ce que** le système de mise en contact (4B) comporte au moins un déclencheur pyrotechnique (12).

7. Dispositif selon la revendication 6,
**caractérisé en ce que** le déclencheur pyrotechnique (12) est configuré pour agir sur l'un (R1) des réactifs auquel il est associé, afin de le projeter de manière à déchirer la membrane de séparation (3B) et à le mettre en contact avec l'autre réactif (R2).

8. Dispositif selon la revendication 7,
**caractérisé en ce qu'**il comporte au moins deux ensembles (13) formés, chacun, d'un réactif (R1) et d'un déclencheur pyrotechnique (12) associé.

9. Dispositif selon l'une quelconque des revendications 1 à 3,
**caractérisé en ce que** l'un (R1) des réactifs est sous forme liquide ou dissout dans un liquide, **en ce que** l'autre (R2) des réactifs est solide et est pourvu de trous allongés (14), et **en ce que** le système de mise en contact (4C) comporte au moins une servo-pompe (15) configurée pour faire circuler le réactif (R1) liquide dans les trous allongés (14) du réactif (R2) solide afin de mettre en contact lesdits réactifs (R1, R2).

10. Equipement d'installation fixe ou de plateforme mobile, en particulier un missile,
**caractérisé en ce qu'**il comporte un dispositif de refroidissement (1) selon l'une quelconque des revendications précédentes.

## Patentansprüche

1. Kühlvorrichtung, umfassend:
- eine dichte Hülle (2), die mindestens zwei Reagenzien (R1, R2) umfasst, wobei die zwei Reagenzien (R1, R2) derart sind, dass ihre Kontaktierung eine endothermische chemische Reaktion erzeugt;
- mindestens eine Trennmembran (3), die konfiguriert ist, um die zwei Reagenzien (R1, R2) in einer Lagerungsposition zu trennen;
- mindestens ein Kontaktierungssystem (4), das geeignet ist, aktiviert zu werden, und konfiguriert ist, um die mindestens zwei Reagenzien (R1, R2) in Kontakt zu bringen, wenn es aktiviert ist, um die endothermische chemische Reaktion auszulösen;
- ein Schnittstelle (5) die ermöglicht, einen externen Auslösebefehl zu empfangen, der durch ein System außerhalb der Kühlvorrichtung (1) erzeugt wird, und den Befehl an das Kontaktierungssystem (4) zu übertragen, um das Kontaktierungssystem (4) zu aktivieren;
- mindestens eine thermische Grenzfläche (6), die mindestens eine metallische Sohle (7) umfasst, die wärmeleitend ist, bei der eine der Seiten (S1) soweit erforderlich der endothermischen chemischen Reaktion unterzogen wird und bei der die andere Seite (S2) von außerhalb der Kühlvorrichtung (1) zugänglich ist, wobei die Vorrichtung **gekennzeichnet ist durch**
- Mittel (16), die konfiguriert sind, um den Druck zu verringern, der durch die endothermische chemische Reaktion in einer Kammer erzeugt wird, in der die endothermische chemische Reaktion stattfindet, wobei die Mittel (16) zur Druckverringerung mindestens eines der folgenden Elemente umfassen: mindestens ein mechanisches Element (17), das geeignet ist, die Gase der Kammer abzuleiten, mindestens eine verformbare Wand (18) der Kammer.

2. Vorrichtung nach Anspruch 1,
**dadurch gekennzeichnet, dass** sie eine Vielzahl von Paaren von Reagenzien (R1, R2) umfasst und dadurch, dass die Paare von Reagenzien für jedes der Paare von Reagenzien (R1, R2) geeignet sind, in Kontakt gebracht zu werden, um eine endothermische chemische Reaktion zu erzeugen.

3. Vorrichtung nach einem der Ansprüche 1 und 2,
**dadurch gekennzeichnet, dass** die Reagenzien (R1, R2) derart sind, dass ihre Kontaktierung eine endothermische Säure Base Reaktion erzeugt.

4. Vorrichtung nach einem der Ansprüche 1 bis 3,
**dadurch gekennzeichnet, dass** das Kontaktierungssystem (4A) ein System (8) mit drehender Klinge (9) umfasst, das konfiguriert ist, um die Trennmembran (3A1, 3A2) zu zerreißen, um die zwei Reagenzien (R1, R2) in Kontakt zu bringen.

5. Vorrichtung nach Anspruch 4,
**dadurch gekennzeichnet, dass** das System (8) mit drehender Klinge (9) ebenfalls konfiguriert ist, um die zwei Reagenzien (R1, R2) nach ihrer Kontaktierung zu mischen.

6. Vorrichtung nach einem der Ansprüche 1 bis 3,
**dadurch gekennzeichnet, dass** das Kontaktierungssystem (4B) mindestens einen pyrotechnischen Auslöser (12) umfasst.

7. Vorrichtung nach Anspruch 6,
**dadurch gekennzeichnet, dass** der pyrotechnische Auslöser (12) konfiguriert ist, um auf das eine (R1) der Reagenzien, dem er zugeordnet ist, einzuwirken, um es derart auszuschleudern, dass es die Trennmembran (3B) zerreißt und es mit dem anderen Reagens (R2) in Kontakt gebracht wird.

8. Vorrichtung nach Anspruch 7,
**dadurch gekennzeichnet, dass** sie mindestens zwei Montagen (13) umfasst, die jeweils aus einem Reagens (R1) und einem zugeordneten pyrotechnischen Auslöser (12) gebildet sind.

9. Vorrichtung nach einem der Ansprüche 1 bis 3,
**dadurch gekennzeichnet, dass** das eine (R1) der Reagenzien in flüssiger oder in einer Flüssigkeit gelösten Form vorliegt, dadurch, dass das andere (R2) der Reagenzien fest ist und mit länglichen Löchern (14) versehen ist, und dadurch, dass das Kontaktierungssystem (4C) mindestens eine Servo-Pumpe (15) umfasst, die konfiguriert ist, um das flüssige Reagens (R1) dazu zu bringen, in den länglichen Löchern (14) des festen Reagens (R2) zu zirkulieren, um die Reagenzien (R1, R2) in Kontakt zu bringen.

10. Ausstattung mit fester Anlage oder mobiler Plattform, insbesondere ein Flugkörper,
**dadurch gekennzeichnet, dass** sie eine Kühlvorrichtung (1) nach einem der vorstehenden Ansprüche umfasst.

## Claims

1. Cooling device comprising:
- a sealed envelope (2) comprising at least two reagents (R1, R2), the two reagents (R1, R2) being such that bringing them into contact generates an endothermic chemical reaction;
- at least one separation membrane (3) configured to separate the two reagents (R1, R2) in a storage position;
- at least one contact-making system (4) capable of being activated and configured to bring into contact said at least two reagents (R1, R2) when it is activated, in order to trigger the endothermic chemical reaction;
- an interface element (5) able to receive an external triggering order which is generated by a system outside of the cooling device (1), and to transmit said order to the contact-making system (4) for activating the contact-making system (4);
- at least one thermal interface (6) comprising at least one metal soleplate (7), thermally conductive, whose one of the faces (S1) is subjected, if necessary, to the endothermic chemical reaction and whose other face (S2) is accessible from the outside of the cooling device (1),
said device being **characterised by** means (16) configured to reduce the pressure generated by the endothermic chemical reaction in a chamber wherein the endothermic chemical reaction occurs, said means (16) for reducing the pressure comprising at least one of the following elements: at least one mechanical element (17) able to evacuate the gases from said chamber, at least one deformable wall (18) of said chamber.

2. Device according to claim 1,
**characterised in that** it comprises a plurality of pairs, of reagents (R1, R2) and **in that**, for each of said pairs of reagents (R1, R2), the reagents of the pair are able to be brought into contact to generate an endothermic chemical reaction.

3. Device according to one of claims 1 and 2,
**characterised in that** the reagents (R1, R2) are such that bringing them into contact, generates an endothermic base acid reaction.

4. Device according to any one of claims 1 to 3,
**characterised in that** the contact-making system (4A) comprises a rotating blade (9) system (8) configured to tear the separation membrane (3A1, 3A2), in order to bring the two reagents (R1, R2) into contact.

5. Device according to claim 4,
**characterised in that** the rotating blade (9) system (8) is also configured to mix the two reagents (R1, R2) after they have been brought into contact.

6. Device according to any one of claims 1 to 3,
**characterised in that** the contact-making system (4B) comprises at least one pyrotechnical trigger (12).

7. Device according to claim 6,
**characterised in that** the pyrotechnical trigger (12) is configured to act on one (R1) of the reagents to which it is associated, in order to project it so as to tear the separation membrane (3B) and to bring it into contact with the other reagent (R2).

8. Device according to claim 7,
**characterised in that** it comprises at least two assemblies (13), each formed of a reagent (R1) and of an associated pyrotechnical trigger (12).

9. Device according to any one of claims 1 to 3,
**characterised in that** one (R1) of the reagents is in liquid form or dissolved in a liquid, **in that** the other (R2) of the reagents is solid and is provided with extended holes (14), and **in that** the contact-making system (4C) comprises at least one servo pump (15) configured to make the liquid reagent (R1) circulate in the extended holes (14) of the solid reagent (R2) in order to bring said reagents (R1, R2) into contact.

10. Equipment of a fixed installation or a mobile platform, in particular a missile,
**characterised in that** it comprises a cooling device (1) according to any one of the preceding claims.
